# EUROPÄISCHE PATENTSCHRIFT

(11) **EP 2 525 947 B1**
(45) Veröffentlichungstag und Bekanntmachung des Hinweises auf die Patenterteilung: **30.03.2016**
(21) Anmeldenummer: 11701081.9
(22) Anmeldetag: 20.01.2011
(51) Int. Cl.: B25J 17/02, B23Q 1/54

(54) **HEXAPOD**
HEXAPOD
HEXAPODE

(30) Priorität: 22.01.2010 DE 102010005586
(43) Veröffentlichungstag der Anmeldung: 28.11.2012
(73) Patentinhaber: Schwab, Martin, 91729 Obererlbach (DE)
(72) Erfinder: Schwab, Martin, 91729 Obererlbach (DE)
(74) Vertreter: Blaumeier, Jörg
(86) Internationale Anmeldenummer: PCT/EP2011/050785
(87) Internationale Veröffentlichungsnummer: WO 2011/089198

(56) Entgegenhaltungen:
- WO-A1-2004/033161
- WO-A1-2006/133583
- US-A- 6 099 217
- US-A1- 2001 002 098
- US-B1- 6 196 081

## Beschreibung

Ein Hexapod ist ein Stell- oder Steuermittel, mit dem es möglich ist, einen beliebigen auf der vorzugsweise plattenförmigen Aufnahme befindlichen Gegenstand in seiner Raumlage zu verändern. Hierzu ist die plattenförmige Aufnahme gelenkig mit wenigstens fünf, vorzugsweise sechs in separaten Gelenken gelagerten, in ihrer Länge gleichbleibenden Stäben verbunden, wobei jeder Stab mit seinem anderen Ende gelenkig an einer Halterung angeordnet ist. Wie in der US-A-6 196 081 offenbart, ist jede Halterung beweglich auf einer gemeinsamen Kreisschiene angeordnet, kann also längs der über die Kreisschiene definierten Kreisbewegungsbahn verfahren werden. Durch Bewegung der Halterungen ändert sich zwangsläufig der Abstand der an ihnen gelenkig gelagerten Stabenden, wobei sich je nach Abstand der Stäbe zwangsläufig auch der Winkel der entsprechenden Stäbe untereinander und damit die Raumlage der ann der Aufnahme befindlichen Stabgelenke variiert werden. Es sind hierdurch alle sechs Freiheitsgrade der beweglichen Platte steuerbar. Die ansteuerbaren Positionen sind jedoch aufgrund der Führung der Halterungen an einer gemeinsamen Kreisschiene begrenzt, spezielle Stellaufgaben sind mit einem solchen Hexapod nicht bewerkstelligbar.

Aus WO 2004/033161 A1 ist ein Hexapod bekannt, umfassend ein zentrales Bauteil, in dem drei Ringe drehgelagert sind. An jedem Ring ist eine Halterung angeordnet, an der über jeweils zwei Kardangelenke zwei Stäbe befestigt sind. Mit den anderen Enden sind die jeweiligen Stäbe in entsprechenden weiteren Kardangelenken an einer zentralen Haltestange befestigt, die ihrerseits über eine kardanische Strebenverbindung mit einer Stange mit einem Werkzeugfutter verbunden ist. Bei diesem Hexapod sind die jeweiligen Stabpaare parallelogrammartig einerseits mit der jeweiligen Halterung, andererseits mit der zentralen Haltestange verbunden. Jeder drehgelagerte Ring ist über einen eigenen Antriebsmotor drehbar, wozu jeder Motor einen Riemen antreibt, der um den jeweiligen Ring läuft.

Der Erfindung liegt damit das Problem zugrunde, einen verbesserten Hexapod anzugeben.

Zur Lösung dieses Problems ist erfindungsgemäß ein Hexapod gemäß Anspruch 1 vorgesehen.

Bei dem erfindungsgemäßen Hexapod ist die aus dem Stand der Technik bekannte "starre" Bindung der Halterungen an nur einen Kreisbahnträger aufgehoben. Erfindungsgemäß ist jede Halterung an einem separaten Träger angeordnet, das heißt, es sind wenigstens fünf, vorzugsweise sechs, separate Halterung-Träger-Paare vorgesehen. Zur Bewegung respektive Positionierung der Aufnahme sind dabei zwei unterschiedliche Bewegungsmöglichkeiten gegeben. Nach einer ersten Erfindungsalternative kann die jeweilige Halterung entlang des jeweiligen Trägers bewegbar sein. Das heißt, dass die Halterung nach Art eines Wagens oder Schlittens am jeweiligen Träger entlangfährt. Die zweite Alternative sieht vor, den jeweiligen Träger samt der an ihm dann fest angeordneten Halterung zu bewegen, mithin also den Träger im Raum zu bewegen, woraus die Stabverstellung resultiert.

Die "Entkopplung" der Halterungen durch Zuordnung respektive Anordnung an jeweils einem halterungsspezifischen separaten Träger ermöglicht eine beliebige Auslegung des jeweils halterungsspezifischen Trägers in seiner Geometrie respektive räumlichen Anordnung. Denn anders als im Stand der Technik ist beim erfindungsgemäßen Hexapod ein Kreisbahnträger nicht mehr zwingend vorgesehen respektive zu verwenden. Vielmehr ist es je nach der geforderten Stellaufgabe, die mit dem Hexapod durchzuführen ist, ohne weiteres möglich, in ihrer Geometrie unterschiedlich ausgelegte Träger zu verwenden, so dass sich abhängig von der Trägergeometrie beliebige räumliche Bewegungsbahnen der einzelnen Halterungen ergeben. Hieraus resultiert zwangsläufig, dass unterschiedlichste Aufnahmebewegungen angesteuert werden können. Der erfindungsgemäße Hexapod lässt aber gleichermaßen auch die Verwendung geometriegleicher Träger, selbst Träger in Kreisringform, zu, die jeweils eine Halterung tragen und zwangsläufig im Raum versetzt zueinander angeordnet sind. Das heißt, dass letztlich mit dem erfindungsgemäßen Hexapod beliebige geometrische Ausbildungen und räumliche Anordnungen der einzelnen Träger zueinander möglich sind, woraus eine große Variabilität hinsichtlich der Auslegung des Hexapods und der Abarbeitung unterschiedlichster Stellaufgaben resultiert. Dies zeigt sich nicht zuletzt darin, dass, wie erfindungsgemäß vorgesehen sein kann, die Träger in der gleichen Horizontalebene, in parallelen Horizontalebenen oder verkippt zueinander angeordnet sein können, wobei selbstverständlich auch beliebige gemische" Trägeranordnungen im Raum möglich sind. Das heißt, dass Träger beliebiger Geometrie (beispielsweise Ring, Ringabschnitt, mehrfach gebogene Träger) nebeneinander in der gleichen Horizontalebene verteilt positioniert werden können, oder aber vertikal versetzt in parallelen Horizontalebenen angeordnet sein können. Daneben ist auch die Möglichkeit gegeben, die Träger in verkippter Stellung zueinander zu positionieren. Das heißt, dass letztlich beliebige Möglichkeiten zur Trägeranordnung im Raum gegeben sind.

Wie beschrieben, können Träger beliebiger Geometrie verwendet werden. Eine bevorzugte Trägerausführung ist die eines Ringes. Beispielsweise ist es möglich, bei Verwendung von sechs Stäben sechs separate, jeweils eine Halterung tragende Ringe zu verwenden, die beispielsweise vertikal in parallelen Horizontalebenen übereinander angeordnet sind. Entweder sind die einzelnen Halterungen auf den lagefesten Ringen bewegbar, oder die Ringe sind einzeln mitsamt den Halterungen bewegbar, in diesem Fall sind sie um eine gemeinsame Drehachse drehbar. Alternativ zur Ringform ist es auch möglich, einen Träger als Ringabschnitt auszuführen. Ein solcher Ringabschnitt kann sich beispielsweise um einen Winkel von 120° oder 180° erstrecken. Auch diese Ringabschnitte können beliebig im Raum verteilt sein, beispielsweise (vergleichbar dem Ausführungsbeispiel mit den übereinander angeordneten Ringen) in übereinander liegenden Horizontalebenen vertikal übereinander angeordnet sein, wobei sie umfangsmäßig versetzt zueinander angeordnet sind. Auch andere räumliche Verteilungen in anderen Ebenen und Ähnliches sind denkbar. Schließlich kann jeder Träger auch eine zwei- oder dreidimensional gewundene Raumform besitzen, mithin also nach Art eines "Splines" gewunden sein.

Eine besonders bevorzugte Ausführungsform sieht vor, die Ringe oder Ringabschnitte konzentrisch übereinander anzuordnen, das heißt, sie in parallelen Horizontalebenen übereinander zu positionieren, wobei sie dann um eine gemeinsame zentrale Drehachse drehbar sind. Denkbar ist es aber auch, sie allesamt in der gleichen Horizontalebene konzentrisch ineinander liegend anzuordnen, also beispielsweise bei Verwendung von sechs Ringen diese konzentrisch ineinander liegend zu positionieren. Auch hier sind die Ringe wiederum um eine gemeinsame zentrale Drehachse drehbar. Denkbar ist auch eine Kombination beider Anordnungsalternativen derart, dass die Ringe oder Ringabschnitte vertikal und radial versetzt zueinander angeordnet sind, so dass sich also beispielsweise eine von oben nach unten gestufte Anordnung ergibt.

Ein weiteres Problem bei einem bekannten Hexapod, wie er einleitend beschrieben ist, der also eine gemeinsame Kreisringbahn, an der alle Halterungen beweglich geführt sind, aufweist, besteht darin, dass jede Halterung mit einem eigenen Antriebsmittel, also einem eigenen Antriebsmotor, verbunden ist, der mitsamt der Halterung bewegt wird. Das heißt, dass entlang der Kreisringschiene nicht nur die Halterungen, sondern auch ihre Antriebsmotoren, die beispielsweise über einen Zahnradmechanismus mit einer entsprechenden Kreisringschienenverzahnung kämmen, bewegt werden. Da jeder Antriebsmotor mit einer Kabelverbindung gekoppelt ist, kommt es bei einer grundsätzlich möglichen Drehung der Aufnahme um 360°, wenn also alle Halterungen um 360° auf der Kreisbahn verfahren, zu einem Aufwickeln der Kabel. Das heißt, dass 360°-Drehungen nur begrenzt möglich sind. Um dem entgegenzutreten, sieht eine besonders vorteilhafte Weiterbildung der Erfindung vor, dass jeder bewegbare Träger oder jede bewegbare Halterung separat über ein eigenes lagefestes Antriebsmittel bewegbar ist, oder dass zwei Träger oder Halterungen miteinander derart bewegungsgekoppelt sind, insbesondere über ein vorzugsweise schaltbares Getriebe, dass sie über ein gemeinsames lagefestes Antriebsmittel bewegbar sind. Beim erfindungsgemäßen Hexapod ist also das Antriebsmittel, beispielsweise der Antriebs- oder Stellmotor, lagefest und folglich unbewegt. Er ist in geeigneter Weise mit dem bewegbaren Träger oder mit der bewegbaren Halterung gekoppelt, worauf nachfolgend noch eingegangen wird. Gleichwohl ist er unabhängig von der beliebig komplexen Halterungs- oder Trägerbewegung lagefest, bewegt sich also nicht mit. Hieraus resultiert, dass beliebige Bewegungen möglich sind, ohne dass die Gefahr einer Kabelaufwicklung gegeben ist. Dies ist insbesondere bei der Ausführung des erfindungsgemäßen Hexapods mit sechs Ringbahnen, z. B. Kreisringen, die ineinander liegend oder übereinander stehend angeordnet sind, von besonderem Vorteil. Denn diese Ausgestaltung ermöglicht eine 360"-Drehung des Hexapods respektive der Aufnahme, wobei beim erfindungsgemäßen Hexapod unendlich viele 360°-Drehungen ohne der Gefahr einer Kabelaufwicklung möglich sind.

Dabei sind zwei unterschiedliche Ausgestaltungen denkbar. Gemäß der ersten ist jeder Träger respektive jede Halterung separat über ein eigenes Antriebsmittel, also einen eigenen Motor, bewegbar. In diesem Fall sind also sechs lagefeste Antriebsmotoren vorgesehen. Denkbar ist aber gemäß der zweiten Alternative auch, zwei Träger oder zwei Halterungen derart miteinander bewegungszukoppeln, dass sie über ein gemeinsames lagefestes Antriebsmittel bewegbar sind. In diesem Fall wären also nur drei Stellmotoren vorgesehen, wobei jeweils ein Stellmotor die Bewegung zweier Träger respektive Halterungen bewirkt. Die Bewegungskopplung kann beispielweise über ein zwischengeschaltetes Getriebe erfolgen, das beispielsweise auch schaltbar sein kann, um einen Träger oder eine Halterung von der Bewegung abzukoppeln, wenn sie separat bewegt werden soll. Das Getriebe kann derart sein, dass die Träger oder die Halterungen in entgegengesetzte Richtungen bewegt werden können, oder in die gleiche Richtung.

Um die Trägerbewegung vornehmen zu können, kann nach einer Weiterbildung der Erfindung jeder bewegbare Träger eine Verzahnung aufweisen, mit der ein über das lagefeste Antriebsmittel, also den lagefesten Motor, angetriebenes Abtriebselement kämmt. Dieses Abtriebselement kann beispielsweise ein Ritzel oder eine Spindel sein, wobei der Motor entweder direkt mit dem Ritzel oder der Spindel gekoppelt ist, oder beispielsweise über eine flexible Antriebswelle damit gekoppelt und extern angeordnet ist. Anstelle eines Ritzels oder einer Spindel ist aber auch ein Riemen- oder Kettentrieb denkbar, das heißt, dass jeder bewegbare Träger z. B. von einem Riemen, in diesem Fall ein Zahnriemen, umschlungen ist, der über den lagefesten Motor angetrieben wird. Es kann also eine unmittelbare Bewegungskopplung beispielsweise über Ritzel oder Spindel oder eine mittelbare über einen Riemen oder einer Kette realisiert sein.

Bei konzentrisch übereinander liegenden kreisrunden Ringen oder Ringabschnitten sieht eine zweckmäßige Weiterbildung der Erfindung schließlich vor, die Verzahnungen an der Außen- oder Innenseite auszubilden. Je nachdem befinden sich folglich die Antriebsmittel, also die Stellmotoren, außerhalb oder innerhalb des konzentrischen Ring- oder Ringabschnittaufbaus. Bei in einer Horizontalebene liegenden Ringen oder Ringabschnitten befindet sich die Verzahnung vorzugsweise an der Unterseite, so dass sich folglich auch die Stellmotoren in diesem Bereich befinden. Handelt es sich bei dem Träger um einen unrunden, also beispielsweise ovalen oder eine beliebige Raumkurve beschreibenden Träger, so ist es unter Verwendung eines Riementriebs möglich, diesen um eine zentrale Achse zu drehen, wobei der Riemen dann den Träger außenseitig umschlingt.

Sofern die Halterung längs des Trägers bewegbar ist, so ist diese zweckmäßigerweise mit einem längs des Trägers geführten Zugmittel, das mit einem Motor gekoppelt ist, bewegbar. Ein solches Zugmittel kann wiederum ein Riemen oder eine Kette sein, die beispielsweise im Inneren des hohlen Trägers angeordnet ist. Eine bewegbare Halterung ist in diesem Fall beispielsweise als Schlitten ausgebildet, der an dem Träger über Rollen, andere Wälzlager oder auch Gleitlager beweglich geführt ist und über eine geeignete Kopplung mit dem Riemen oder der Kette verbunden ist.

Um die Beweglichkeit der Träger sicherzustellen, sieht die Erfindung ferner vor, die bewegbaren Träger, insbesondere Ringe oder Ringabschnitte, über Lagermittel an einem oder mehreren feststehenden Bauteilen zu lagern, oder sie über zwischen ihnen angeordnete Lagermittel relativ zueinander beweglich zu lagern. Grundsätzlich sind dabei alle möglichen Lagerungsarten denkbar, solange sie die separate Bewegung der einzelnen Träger zulassen. Als Lagermittel können Kugellager, Rollenlager, Gleitlager, Luftlager, Magnetlager etc. verwendet werden, die je nachdem, wie die Träger relativ zueinander beweglich gelagert sind, ausgelegt sind.

Die beweglichen Träger, insbesondere die Ringe oder Ringabschnitte, können nach einer ersten Erfindungsaltemative jeweils einen Lagerarm aufweisen, wobei alle Lagerarme über Lagermittel an einer gemeinsamen zentralen Lagerstütze gelagert sind. Sind die Träger beispielsweise Ringe, so weist jeder Ring eine nach innen zum Kreismittelpunkt laufenden Lagerarm auf, wo alle Lagerarme der beispielsweise sechs Ringe an einer gemeinsamen zentralen Lagerstütze über geeignete Wälzlager gelagert sind. Die Kreisform der Ringe ist jedoch keine Grundvoraussetzung. Vielmehr ist diese Lagerart grundsätzlich bei allen Trägerformen möglich. Dabei können die Träger in unterschiedlichen Horizontalebenen angeordnet sein, also beispielsweise vertikal gesehen übereinander liegen. Denkbar ist aber auch, einen solche zentrale Lagerstütze bei in einer gemeinsamen Horizontalebene liegenden Ringträgern zu verwenden, wobei dann die Lagerarme entsprechend gewinkelt ausgeführt sind, um sie zur zentralen Lagerstütze zu führen.

Bei Ausführung des Hexapods mit konzentrischen und im Durchmesser gleichen Ringen besteht die Möglichkeit, diese als weitere Lageralternative mit ihren Außenseiten an wenigstens drei Lagerstützen über jeweilige stützenseitige Lagermittel zu lagern. Die Ringe sind übereinander angeordnet, radial innerhalb oder außerhalb des Ringaufbaus befinden sich drei äquidistant verteilte Lagerstützen mit entsprechenden Lagermitteln, auf denen die Ringe abwälzen. Auch hierüber kann eine einfache Lagerung erreicht werden. Alternativ besteht hier die Möglichkeit, die Lagermittel auch zwischen die einzelnen Ringe zu bringen, beispielsweise in Form von Axiallagerringen mit beliebigen Wälzkörperformen.

Schließlich ist zweckmäßigerweise eine gemeinsame, alle Antriebsmittel steuernde Steuerungseinrichtung vorgesehen, die eine hochgenaue Positionierung der einzelnen Halterungen, sei es durch Bewegen der jeweiligen Träger oder durch Bewegen der Halterung selbst, ermöglicht, um die gewünschten Aufnahmepositionen einstellen zu können. An dieser Stelle sei jedoch erwähnt, dass grundsätzlich insbesondere bei der Ausgestaltung des Hexapods mit vertikal übereinander angeordneten Ringen auch eine manuelle Bewegbarkeit der Ringe, sofern diese bewegbar sind, oder der Halterungen, sofern diese entlang der Ringe bewegbar sind, zur Positionsverstellung vorgesehen werden kann.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Perspektivansicht eines erfindungsgemäßen Hexapods einer ersten Erfindungsform,
- Fig. 2: den Hexapod aus Fig. 1 in einer Seitenansicht,
- Fig. 3: den Hexapod aus Fig. 1 in einer Aufsicht,
- Fig. 4: ein detaillierter Ausschnitt zur Darstellung der Lagerung der einzelnen Träger,
- Fig. 5: einen detaillierten Ausschnitt zur Darstellung der Anordnung einer Halterung an einem Träger,
- Fig. 6: ein detaillierter Ausschnitt zur Darstellung des Antriebsmechanismus der einzelnen Träger,

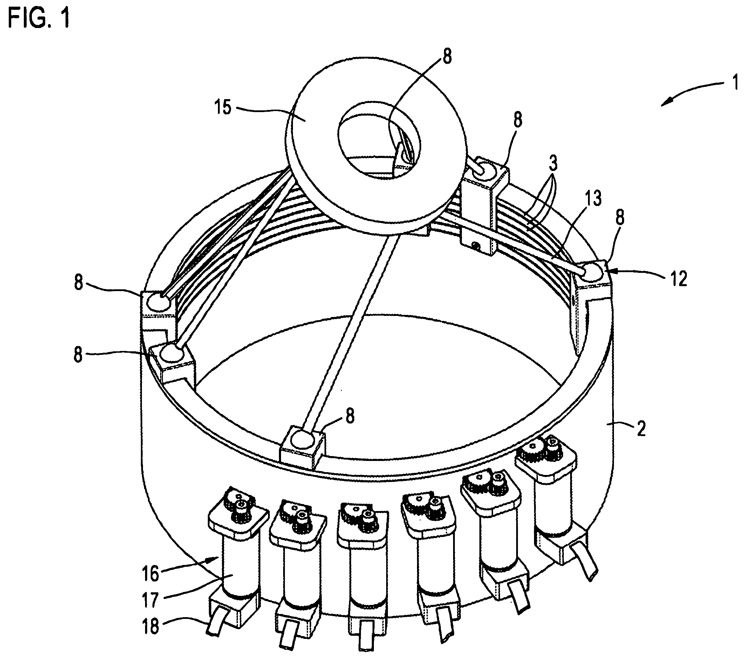

Figuren
- 7 - 9: verschiedene Ansichten des Hexapods aus Fig. 1 mit unterschiedlichen Positionen der Aufnahme,

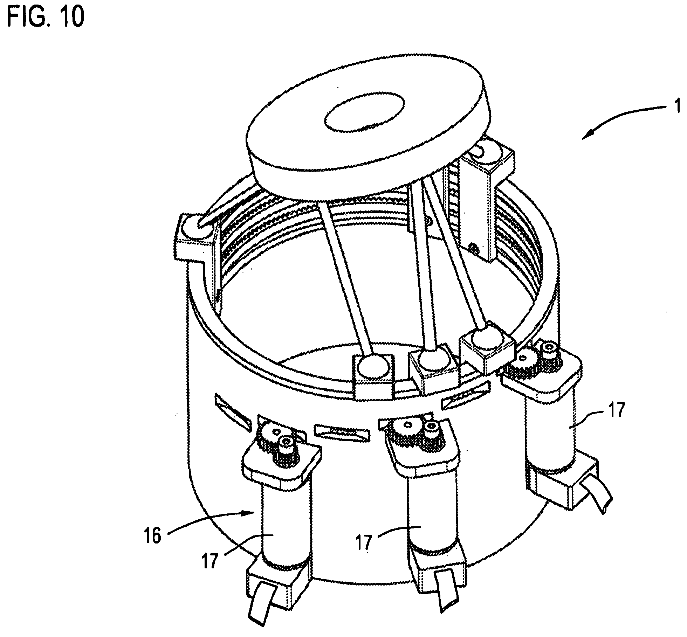

- Fig. 10: eine Perspektivansicht eines Hexapods einer zweiten Ausführungsform mit jeweils paarweise bewegungsgekoppelten Trägern,

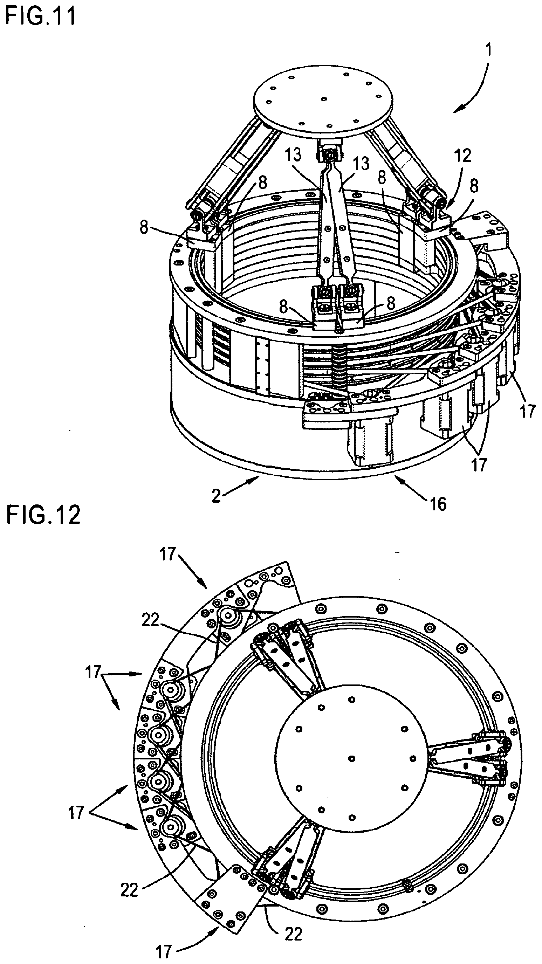

- Fig. 11: eine Perspektivansicht eines erfindungsgemäßen Hexapods einer dritten Ausführungsform mit Riemenantrieb,
- Fig. 12: eine Aufsicht auf den Hexapod aus Fig. 11,

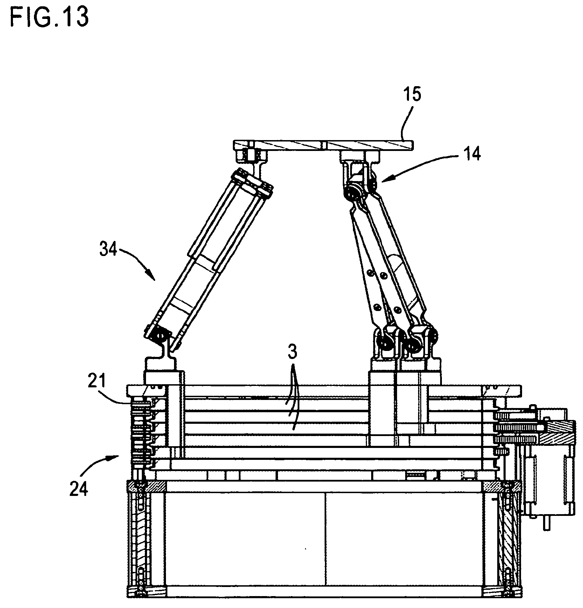

- Fig. 13: eine Seitenansicht des Hexapods aus Fig. 11,

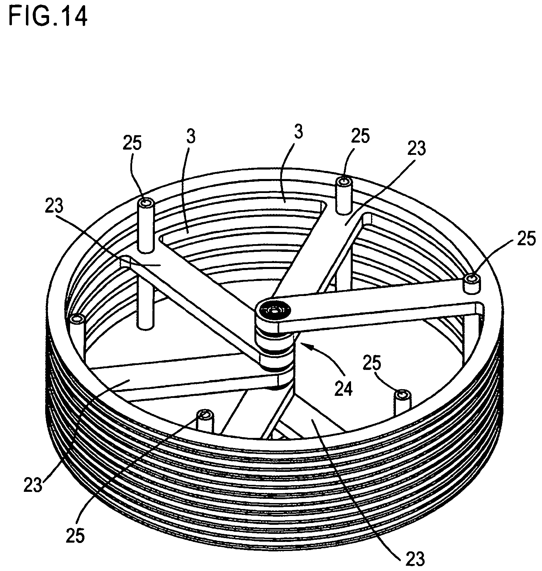

- Fig. 14: eine Teilansicht einer Lagermöglichkeit der ringförmigen Träger nach einer weiteren erfindungsgemäßen Ausführung,

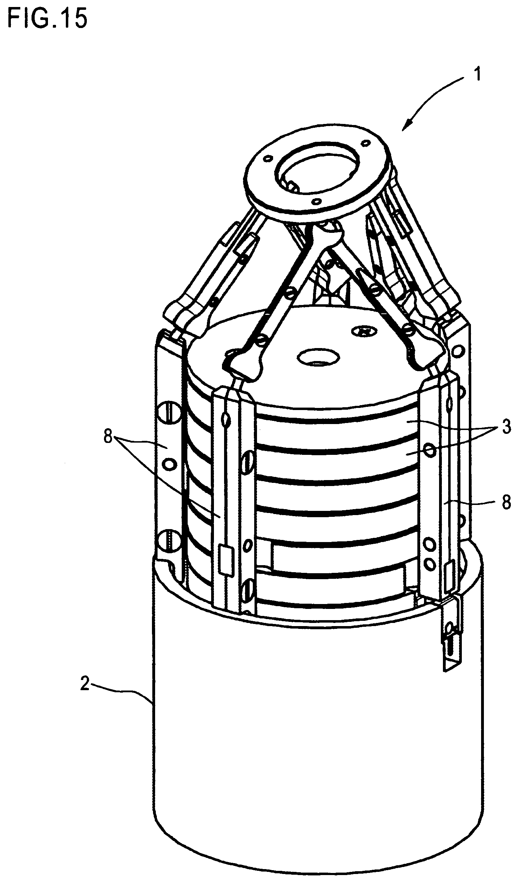

- Fig. 15: eine Perspektivansicht eines erfindungsgemäßen Hexapods einer vierten Ausführungsform mit innen liegendem Antrieb,

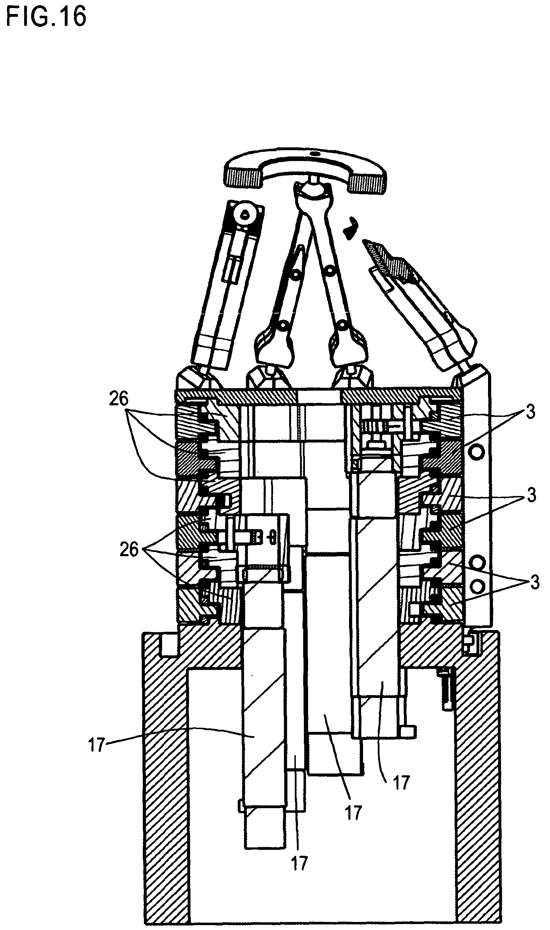

- Fig. 16: eine Schnittansicht durch den Hexapod aus Fig. 15,

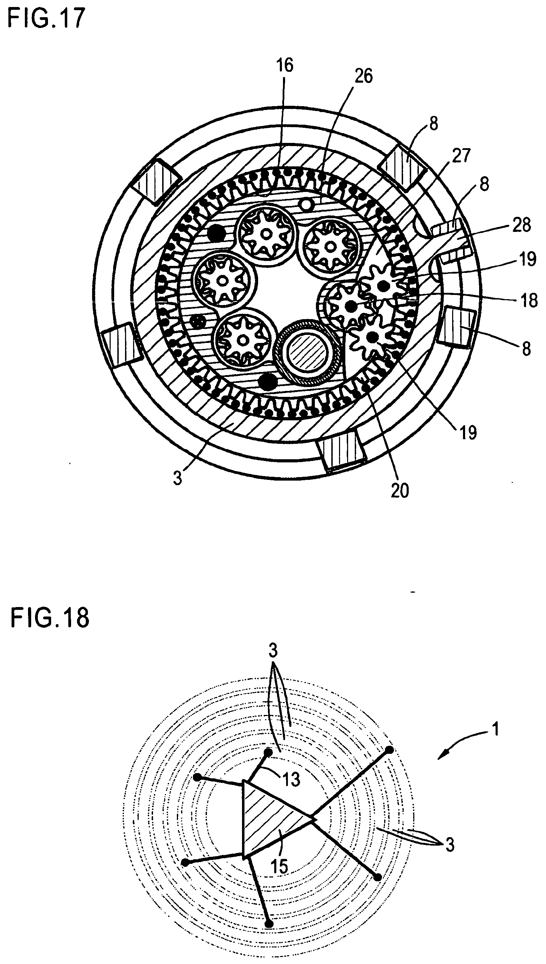

- Fig. 17: eine Aufsicht auf den Hexapod aus Fig. 15 im Schnitt zur Darstellung des Innenantriebs,
- Fig. 18: eine Prinzipdarstellung eines erfindungsgemäßen Hexapods einer fünften Ausführungsform mit konzentrisch angeordnetem, in einer Horizontalebene ineinander liegenden Trägern,

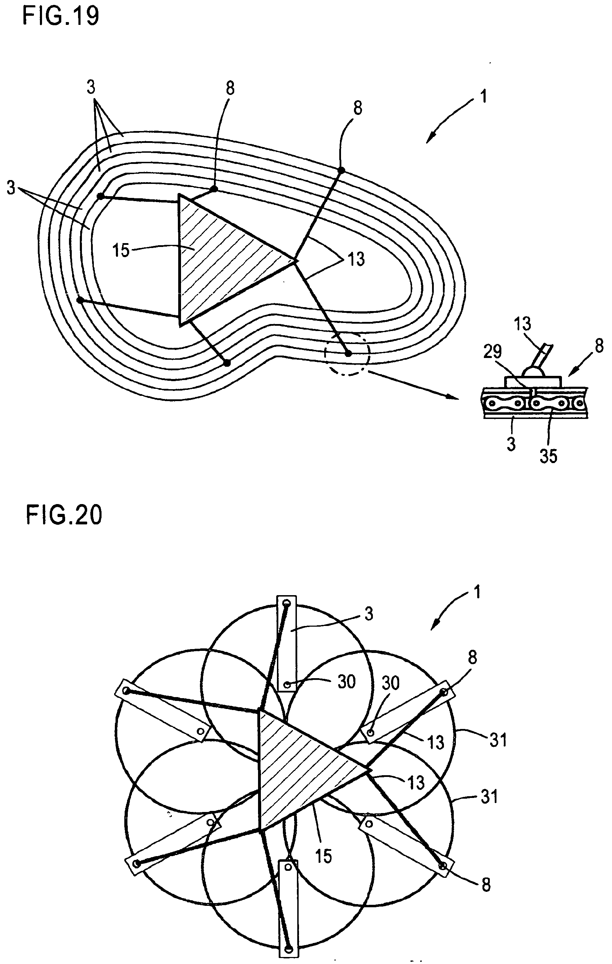

- Fig. 19: eine Prinzipdarstellung eines erfindungsgemäßen Hexapods einer sechsten Ausführungsform mit eine beliebige Bahnkontur beschreibenden Trägern,
- Fig. 20: eine Prinzipdarstellung eines nicht zur Erfindung gehörenden Hexapods einer siebten Ausführungsform mit kurbelartig gelagerten Trägern, die axial zueinander versetzt sind und im Raum verkippte Bahnen beschreiben, und

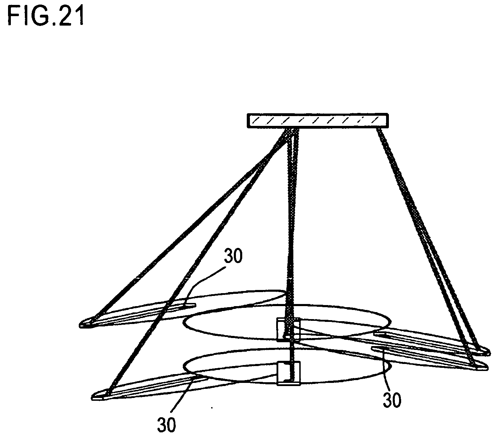

- Fig. 21: eine Seitenansicht des nicht zur Erfindung gehörenden Hexapods aus Fig. 20.

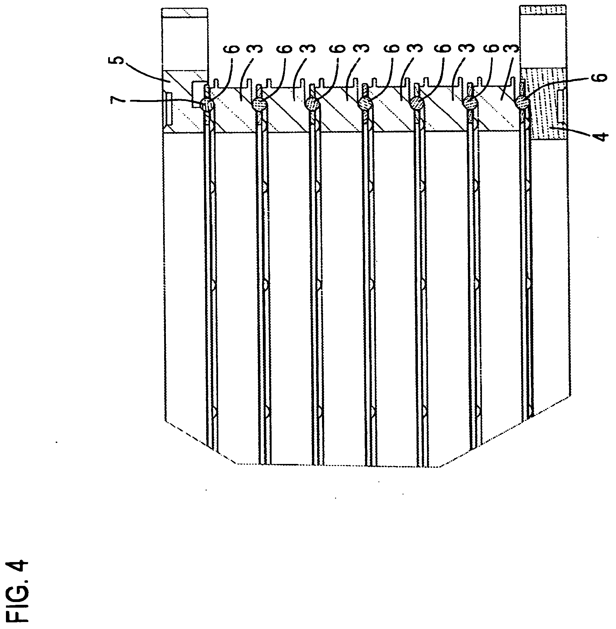

Fig. 1 zeigt einen erfindungsgemäßen Hexapod 1 einer ersten Ausführungsform, umfassend ein äußeres zylindrisches Gehäuse 2, in dem im gezeigten Ausführungsbeispiel insgesamt sechs separate Träger 3 (siehe insbesondere Fig. 4) um eine gemeinsame Drehachse drehbar aufgenommen sind. Die Träger 3 sind als Ringe ausgebildet, die vertikal übereinander in parallelen Horizontalebenen angeordnet sind. Sie sind zwischen einer unteren, beispielsweise ringförmigen Bodenplatte 4 und einem oberen Abdeckring 5 drehgelagert aufgenommen. Hierzu sind zwischen Bodenplatte 4 und dem benachbarten Träger 3, zwischen den einzelnen Trägern 3 sowie zwischen dem oberen Träger 3 und dem Abdeckring 5 Lagermittel 6, im gezeigten Beispiel in Form von Wälzlagern 7 (Axiallager), angeordnet. Hierüber wird ermöglicht, dass jeder Träger 3 separat relativ zu einem benachbarten Träger respektive einer der benachbarten Platten drehen kann.

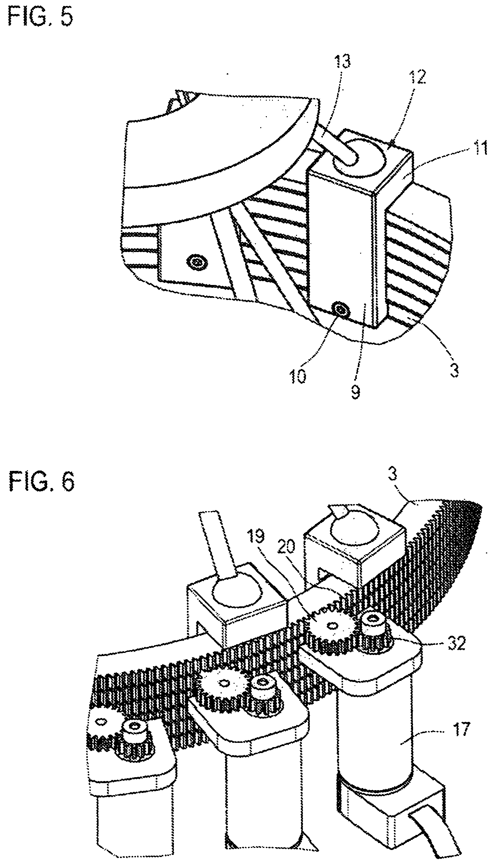

Mit jedem Träger 3 ist eine Halterung 8 fest verbunden, so dass die Halterung bei einer Drehung des Trägers 3 längs einer Kreisbahn mit dem Träger bewegt wird. Die Halterungen sind im Querschnitt gesehen L-förmig ausgeführt, sie weisen einen inneren Befestigungsabschnitt 9 auf (siehe hierzu Fig. 5), über den sie über eine Befestigungsschraube 10 mit dem jeweiligen Träger 3 verbunden sind. Der obere quer oder horizontal liegende Abschnitt 11 befindet sich oberhalb des oberen Abdeckringes 5, übergreift diesen also mit Spiel. An jedem Abschnitt 11 einer Halterung 8 ist ein Gelenk 12 vorgesehen, im gezeigten Beispiel ein Kugelgelenk, in dem jeweils ein Stab 13 gelenkig aufgenommen ist. Jeder Stab 13 ist mit seinem oberen Ende wiederum in einem Gelenk 14 an einer Aufnahme 15, auf der ein beliebiger über den Hexapod 1 zu stellender Gegenstand (beispielsweise ein Werkzeug oder dergleichen) angeordnet werden kann, gelenkig gelagert, auch hier ist exemplarisch ein Kugelgelenk darstellt. Bereits an dieser Stelle ist darauf hinzuweisen, dass anstelle der gezeigten Kugelgelenke selbstverständlich auch jedwede andere Gelenkverbindung, die eine freie Beweglichkeit im Raum ermöglicht, eingesetzt werden kann.

Um die einzelnen Träger 3 und damit die einzelnen Halterungen 8 separat um die zentrale Drehachse bewegen zu können, ist jedem einzelnen Träger 3 ein separates Antriebsmittel 16 in Form eines Stellmotors 17 zugeordnet. Die Stellmotoren 17 sind, siehe beispielsweise Fig. 1, lagefest an dem zylindrischen Gehäuse 2 angeordnet. Das heißt, sie bewegen sich nicht, wenn die Halterungen 8 zum Verstellen der Position der Aufnahme 15 bewegt werden. Hierzu sind die Stellmotoren 17 über jeweils ein Abtriebsritzel 18 und ein zwischengeschaltetes Zahnrad 19 mit einer Außenverzahnung 20 des jeweiligen Trägers 3 gekoppelt, siehe hierzu Fig. 6. Aus dieser ist ersichtlich, dass jeder Träger 3 eine Außenverzahnung aufweist, in die jeweils das zwischengeschaltete Zahnrad 19 des jeweiligen Stellmotors 17 eingreift. Hierüber kann hochgenau die Trägerposition und darüber die Halterungsposition verstellt werden, worüber sich die jeweilige Raumstellung des gekoppelten Stabes 13 und hierüber wiederum die Raumposition der gekoppelten Aufnahme 15 verändert.

Der erfindungsgemäße Hexapod 1 ermöglicht mit seinen sechs separaten Antriebsmitteln 16 die Kontrolle von insgesamt sieben Freiheitsgraden. Zum einen kann die Aufnahme 15 in der Horizontalebene um die X-Achse verschoben und begrenzt um die X-Achse gedreht werden. Gleichermaßen kann die Aufnahme 15 in dieser Horizontalebene um die Y-Achse verschoben und begrenzt um die Y-Achse gedreht werden. Darüber hinaus ist die Aufnahme 15 auch um die vertikale Z-Achse verschiebbar, jedoch infolge der lagefesten Anordnung der Antriebsmittel 16, die also nicht bewegt werden und bei denen sich folglich ihre Kabelzuleitungen 18 nicht aufwickeln können, unbegrenzt um diese aufnahmebezogene Z-Achse (die die ebene Aufnahme 15 also vertikal schneidet) drehbar. Zusätzlich ist die Aufnahme 15 aber auch um die zentrale vertikale Z-Achse des Hexapds, um die also sämtliche Träger 3 drehen, unendlich oft drehbar. Das heißt, dass zwei unbegrenzte 360°-Drehungen um zwei verschiedene Z-Achsen, nämlich zum einen die aufnahmebezogene Z-Achse, zum anderen die zentrale hexapodeigene Z-Achse, möglich sind. Beide Drehungen sind allein über die sechs Antriebsmittel unbegrenzt möglich, da sich diese nicht bewegen und es infolgedessen auch nicht zu einer Aufwicklung der Kabelzuführungen 18 kommt. Die volle Drehung der Aufnahme 15 um die eigene Z-Achse ist jedoch nicht in allen möglichen Stellungen der Aufnahme 15 möglich, da die Verfahrgrenzen der sechs Halterungen 8 dem eine Grenze setzen. Ist die Aufnahme 15 nicht allzu sehr aus der Horizontalen verkippt, ist eine unbegrenzte 360°-Drehung jedoch ohne weiteres möglich. Die Drehung um die zentrale Drehachse des Hexapods selbst ist hingegen in jeder Stellung der Aufnahme 15 möglich, da dabei alle sechs Halterungen 8 mit dem gleichen Bewegungsprofil bewegt werden, das heißt, dass alle Träger 3 homogen mit der gleichen Geschwindigkeit respektive Beschleunigung bewegt werden.

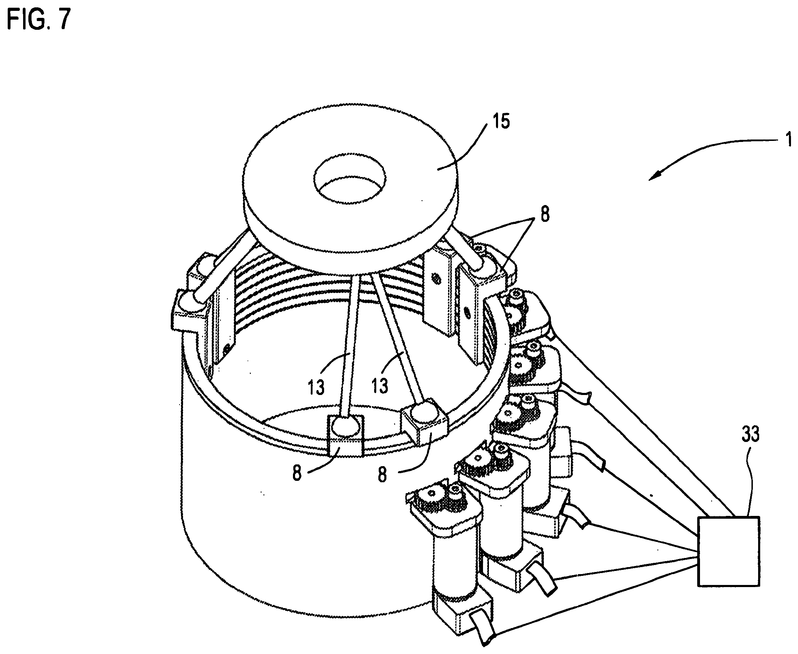

Die Figuren 7 - 9 zeigen verschiedene Positionierungsbeispiele der Aufnahme 15 eines beschriebenen Hexapods 1. In Fig. 7 sind jeweils zwei Halterungen 8 zweier Stäbe 13, die benachbart an den entsprechenden Gelenken der Aufnahme 15 gelagert sind, relativ nah zueinander gefahren, wobei die drei Halterungspaare im gezeigten Beispiel im Wesentlichen äquidistant voneinander beabstandet sind, so dass sich die Aufnahme 15 also im Wesentlichen in einer horizontalen Position befindet.

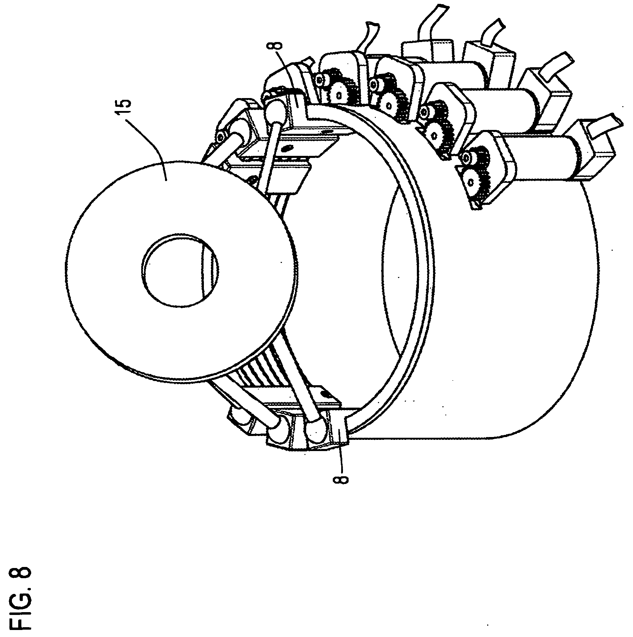

Aus dieser wurde die Aufnahme 15 in die in Fig. 8 gezeigte, stark verkippte Position gebracht, indem hierbei lediglich die in Fig. 7 vorne gezeigten beiden Halterungen 8 in entgegengesetzte Richtungen verfahren wurden, so dass sich letztlich quasi zwei Gruppen jeweils umfassend drei Halterungen 8 ergeben, wie Fig. 8 deutlich zeigt.

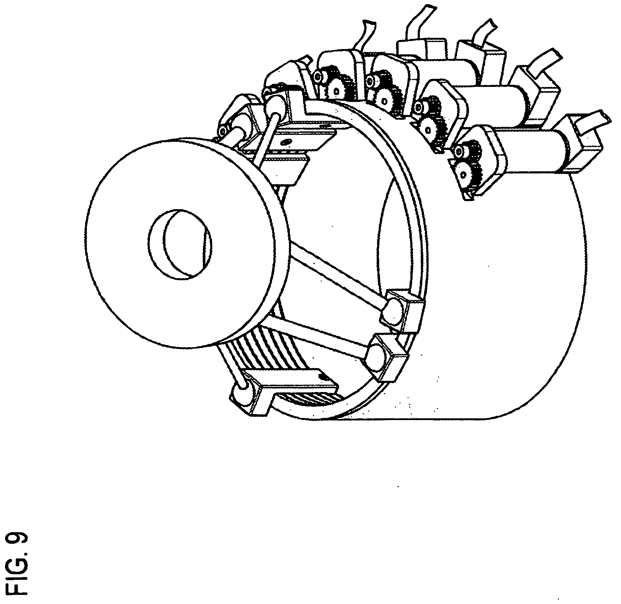

Um die Aufnahme 15 wieder etwas anheben zu können, jedoch in ihrer Raumlage, was ihre eigene flächige Ebene betrifft, wiederum verstellen zu können, werden sodann zwei Halterungen 8 des in Fig. 8 links gezeigten Triples ausgehend von Fig. 8 nach rechts verfahren, wie in Fig. 9 gezeigt. Hierüber kommt es zu einem Aufrichten unter Verlagerung der Aufnahmeebene. Aus diesen wenigen Beispielen ist ersichtlich, dass unter Verwendung des erfindungsgemäßen Hexapods beliebige Raumpositionen der Halterung 15 eingestellt werden können. Durch entsprechende Ansteuerung der Antriebsmittel 16 über eine gemeinsame Steuerungseinrichtung 33, die exemplarisch lediglich in Fig. 7 gezeigt ist, können auch sämtliche Verschiebe- respektive Verdrehbewegungen wie auch die beschriebenen 360°-Rotationen, insbesondere die unbegrenzte Rotation der Aufnahme 15 um die zentrale Drehachse, ermöglicht werden.

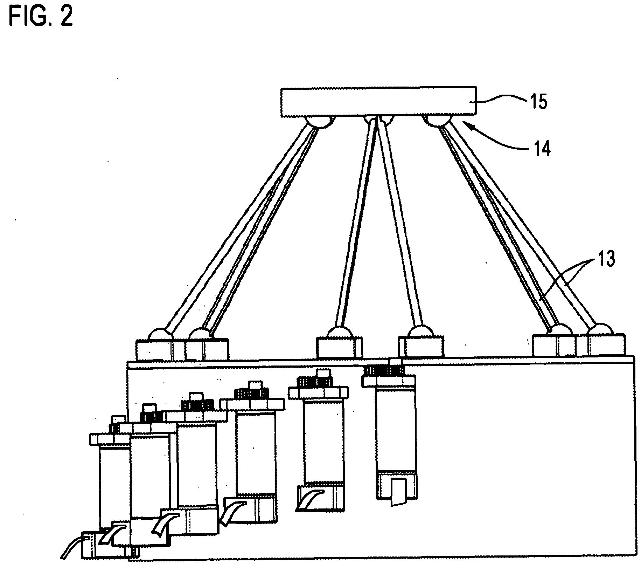

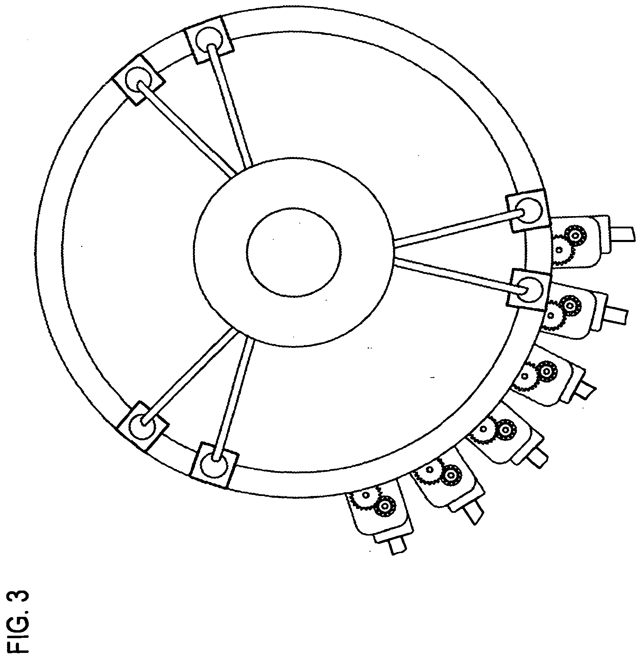

Fig. 10 zeigt einen weiteren erfindungsgemäßen Hexapod, wobei soweit möglich für gleiche Bauteile gleiche Bezugszeichen verwendet werden. Der Hexapod 1 aus Fig. 10 entspricht vom Aufbau her grundsätzlich dem Hexapod 1 aus den Figuren 1 - 9. Jedoch sind hier nur drei Antriebsmittel 16 in Form der Stellmotoren 17 vorgesehen, wobei über jeden Stellmotor 17 zwei Träger 3 angetrieben werden können. Hierzu ist zwischen jeden Stellmotor 17 und die beiden gekoppelten Träger 3 ein nicht näher gezeigtes schaltbares Getriebe gesetzt, das über die Steuerungseinrichtung 33 (siehe Fig. 7, eine solche ist selbstverständlich bei jeder Ausführungsform vorhanden) separat angesteuert werden kann. Ein solches schaltbares Getriebe lässt zum einen einen simultanen Bewegungsbetrieb der beiden gekoppelten Träger zu, das heißt, dass diese gleichzeitig entweder in die gleiche oder in entgegengesetzte Richtungen bewegt werden können. Darüber hinaus kann das Getriebe aber auch derart schaltbar ausgelegt sein, dass bei Bedarf ein Träger entkoppelt wird und nur der andere Träger über den Stellmotor 17 in eine beliebige Richtung bewegt werden kann und umgekehrt. Mit einer solchen Auslegung können Motoren eingespart werden, wobei insbesondere dann, wenn über das schaltbare Getriebe die einzelnen Träger auch separat angetrieben werden können, die gleichen Stellmöglichkeiten gegeben sind wie bei der Ausführungsform nach den Figuren 1 ff., jedoch etwas verlangsamt. Grundsätzlich ist es aber natürlich auch denkbar, beispielsweise über einen Stellmotor 17 drei Träger 3 zu bedienen, so dass man mit nur zwei Stellmotoren 17 auskommt.

Die Figuren 11 - 13 zeige eine weitere Ausführungsform eines erfindungsgemäßen Hexapods 1. Dieser umfasst wiederum sechs separate Träger 3, an denen wiederum jeweils eine Halterung 8, die dem Grunde nach der Halterung 8 des ersten Ausführungsbeispiels entspricht, an der Trägerinnenseite angeordnet sind. Die Träger 3 sind auch hier wiederum als Ringe ausgeführt. Die Gelenke 12 sind hier als Kardangelenke ausgeführt, ebenso die Gelenke 14 an der Aufnahme 15, wobei im gezeigten Beispiel zwei Streben 13 (jeweils als Doppelstreben ausgeführt) an einem gemeinsamen Gelenk 14 bzw. Punkt angeordnet sind.

Die Drehlagerung der sechs Träger 3 erfolgt im gezeigten Ausführungsbeispiel an insgesamt drei Lagerstützen 34, die jeweils mehrere Rollen 21, im gezeigten Beispiel insgesamt sechs Rollen 21, aufweisen. Die Lagerstützen 34 sind äquidistant im Bereich der Außenseite der Träger 3 angeordnet, sie sind um 120° versetzt zueinander am Hexapodgehäuse 2 (das auch ein Gestell oder Ähnliches sein kann) positioniert. An respektive auf den Rollen 21 sind die einzelnen Träger 3 drehgelagert, wozu die Träger 3 eine entsprechende Außenprofilierung besitzen, so dass sie auf den Rollen 21 abwälzen können. In jedem Fall ist über diese "Drei-Punkt-Lagerung" eine vollständige Drehlagerung jedes einzelnen Trägers 3 realisiert.

Zum Antrieb der einzelnen Träger 3, die wiederum jeweils separat angetrieben und hierüber folglich die einzelnen Halterungen 8 längs einer Kreisbahn verstellt werden können, sind wiederum insgesamt sechs separate Antriebsmittel 16 in Form der Stellmotoren 17 vorgesehen. Diese sind wiederum lagefest am Gehäuse 2 angeordnet. Der Trägerantrieb erfolgt im gezeigten Beispiel über jeweils einen Riemen 22, der den jeweiligen Träger 3 außen umschlingt. Da die Träger 3 übereinander angeordnet sind, folglich in unterschiedlichen Horizontalebenen positioniert sind, sind folglich auch die Stellmotoren 17 vertikal versetzt angeordnet (siehe auch die Ausführung 1 gemäß den Figuren 1 - 9 und die Ausführung 2 gemäß Fig. 10). Hieraus resultiert, dass zwangsläufig auch die entsprechenden Riemen 22 in den unterschiedlichen Horizontalebenen laufen. Da auch hier die Stellmotoren 17 lagefest sind, sind beliebige 360°-Drehungen möglich, ohne dass die Gefahr einer Kabelaufwicklung (selbstverständlich ist jeder Stellmotor 17 über geeignete Kabelverbindungen mit der bereits beschriebenen Steuerungseinrichtung etc. verbunden) zu besorgen ist. Jeder Riemen 22 kann als Zahnriemen ausgeführt sein, wobei dann die Außenfläche des jeweiligen Trägers 3 ebenfalls eine Verzahnung aufweist. Denkbar ist aber auch, dass der Riemen wie auch die Trägeraußenseite unprofiliert ist.

Fig. 14 zeigt als Prinzipdarstellung eine weitere Ausführungs- respektive Lagerungsmöglichkeit der einzelnen Träger 3, wie sie bei einem Hexapod möglich ist, der beispielsweise einen Riemenantrieb aufweist wie in den Figuren 11 - 13 beschrieben, jedoch auch bei anderen Hexapodtypen verwendet werden kann. Im gezeigten Beispiel weist jeder Träger 3 einen nach innen gerichteten Lagerarm 23 auf, wobei alle Lagerarme in der Mitte der Ringe enden und an einer gemeinsamen zentralen Lagerstütze 24 über geeignete Lagermittel wie Wälzlager, Rollen und Ähnliches gelagert sind. Hierzu weist jeder Lagerarm eine geeignete Lagerdurchbrechung auf, die beispielsweise selbst den Außenring eines Wälzlagers bildet, oder in welches ein solcher Außenring oder das Wälzlager selbst eingeschrumpft ist etc. In jedem Fall ist eine einfache Drehlagerung über diese innere Lagerstütze gegeben. An jedem Tragarm sind ferner Befestigungsaufnahmen 25 für jeweils eine separate, hier nicht näher gezeigte Halterung 8 vorgesehen. Diese kann also drehfest mit dem jeweiligen ringförmigen Träger 3 verbunden werden. Anstelle eines Riementriebs ist selbstverständlich auch ein Zahnradtrieb wie bei der ersten Ausführungsform nach den Figuren 1 ff. möglich.

Die Figuren 15 - 17 zeigen eine weitere Ausführungsform des erfindungsgemäßen Hexepods 1, bei dem - anders als bei den bisher beschriebenen Ausführungsbeispielen - die Antriebsmittel 16 im Inneren angeordnet sind, folglich also die einzelnen Träger 3 von innen her angetrieben werden. Vorgesehen ist auch hier wiederum ein Hexapodgehäuse 2 sowie sechs Träger 3. Jeder Träger 3 ist über geeignete Lagermittel 6 wie beispielsweise Axialkugellager drehbar an einer Innenkonstruktion bestehend aus separaten, lagefesten Lagerringen 26 angeordnet. Das heißt, die Lagerringe 26 bilden eine lagefeste innere Lager- oder Tragstruktur, an welcher die einzelnen Träger 3 über die Lagermittel 6, also die Axiallagerringe, drehgelagert aufgenommen sind. An der inneren, aus den Lagerringen 26 gebildeten Tragstruktur sind im gezeigten Beispiel die sechs Antriebsmittel 16 in Form der einzelnen Stellmotoren 17 angeordnet. Jeder Lagerring 26 weist eine Ausnehmung 27 auf, durch die das Abtriebsritzel 32 jedes Stellmotors 17 greift und über im gezeigten Beispiel 2 zwischengeschaltete Zahnräder 19 mit der Innenverzahnung 20 jedes Trägers 3 kämmt (siehe Fig. 16, wobei die oberen, einzeln gezeigten Teile nur aufgrund der Schnittdarstellung derart "lose" gezeigt sind). Ersichtlich sind die Stellmotoren 17 in unterschiedlichen Höhenpositionen angeordnet, so dass sich die unterschiedlichen Horizontalebenen hinsichtlich der Verzahnungskopplung einstellen lassen. Auf diese Weise ist es wiederum möglich, über einen im Inneren des Gestells 2 angeordneten, sechs Stellmotoren 17 umfassenden unbewegten Antrieb jeden Träger 3 einzeln bewegen zu können.

An den Außenseiten eines jeden Trägers 3 ist wiederum jeweils eine Halterung 8 drehfest angeordnet, wozu, siehe die Schnittansicht gemäß Fig. 17, an jedem Träger 3 ein radial nach außen stehender Ansatz 28 vorgesehen ist, an dem die jeweilige Halterung 8 befestigt ist. Im Betrieb bewegen sich die Halterungen 8 folglich längs der Außenperipherie des Ringaufbaus.

Infolge der lagefesten Anordnung der Stellmotoren 17 und der Befestigung jeder Halterung 8 an einem separaten Träger 3 sind wiederum unbegrenzte 360°-Drehungen bei gleichzeitiger höchstgradig flexibler Positionierungsmöglichkeit gegeben.

Fig. 18 zeigt als Prinzipdarstellung eine weitere Ausführungsform eines erfindungsgemäßen Hexapods 1. Bei diesem sind wiederum sechs als Ringe ausgeführte Träger 3 vorgesehen, die jedoch von außen nach innen im Radius abnehmen und konzentrisch ineinander liegend in einer Horizontalebene angeordnet sind. Wiederum ist die Aufnahme 15 über ihre sechs Streben oder Stäbe 13 mit jeweils einem Träger 3 in der bereits beschriebenen Weise gelenkig verbunden, wobei hier die Streben 13 zwangsläufig infolge des radialen Aufbaus unterschiedlich lang sind. Die Träger 3 sind wiederum separat um die zentrale mittige Drehachse bewegbar, wozu wiederum sechs separate lagefeste Antriebsmittel 16 in Form von Stellmotoren 17 vorgesehen sind. Diese sind im gezeigten Beispiel unterhalb der Ebene der Träger 3 angeordnet und deshalb nicht sichtbar. Beispielsweise weist jeder Träger 3 an seiner Unterseite eine Verzahnung auf, mit der ein Stellmotor 17 zusammenwirkt, was entweder unmittelbar über das Abtriebsritzel oder ein zwischengeschaltetes Zahnrad erfolgen kann, oder beispielsweise über eine flexible Antriebswelle, so dass eine Anordnung der einzelnen Stellmotoren 17 auch seitlich des Trägeraufbaus möglich ist, wenn dies aus Platzgründen gegebenenfalls erforderlich ist.

Fig. 19 zeigt ein Ausführungsbeispiel eines erfindungsgemäßen Hexapods 1 in Form einer Prinzipdarstellung, bei dem wiederum sechs separate Träger 3 vorgesehen sind. Diese beschrieben jedoch eine beliebige asymmetrische Kontur, wobei im gezeigten Beispiel die grundsätzlichen Konturen der einzelnen Träger 3 insoweit gleich sind, sich die Träger 3 jedoch größenmäßig unterscheiden. Sie sind beispielsweise in der gleichen Horizontalebene ineinander liegend angeordnet. Jeder Träger 3 ist als eine geschlossene Bahn definierende Führungsschiene ausgeführt, er ist - anders als bei den zuvor beschriebenen Ausführungsformen - jedoch lagefest. Die einzelnen Halterungen 8, über die die Aufnahme 15 über ihre Streben 13 mit den jeweiligen Trägern 3 gekoppelt ist, sind bei dieser Ausführungsform längs der feststehenden Träger 3 bewegbar. Zu diesem Zweck sind die Halterungen 8 als Schlitten oder Wagen ausgeführt, sie verfahren längs der Trägeroberseite, die Träger 3 geben also die Bewegungsbahn vor. Um die Halterungen 8 bewegen zu können, sind die Träger 3 als Hohlprofile ausgeführt, so dass im Inneren eines jeden Trägers 3 ein separates Zugmittel, beispielsweise ein Riemen oder eine Kette, laufen kann. Eine Prinzipdarstellung ist in dem vergrößerten Ausschnitt aus Fig. 19 gezeigt. Das Zugmittel 35 wirkt also im Inneren eines Trägers 3, kann jedoch zur Verbindung mit einem Antriebsmittel in Form eines Stellmotors, der hier nicht näher gezeigt ist, an einer Stelle aus dem Träger 3 herausgeführt sein. Der Motor kann aber auch mit einem Abtriebsritzel in die Führungsschiene eingreifen und an der Kette angreifen. Die Halterung 8 selbst ist als Schlitten oder Wagen ausgeführt und über einen Verbindungszapfen 29 oder Ähnliches in dem Zugmittel 35 verbunden. Wird das Zugmittel 35 im Träger 3 bewegt, so wird zwangsläufig die Halterung 8, die auf den Träger über ein Wälzlager oder ein Gleitlager oder Ähnliches beweglich aufgenommen ist, längs des Trägers 3 bewegt.

Nachdem im gezeigten Ausführungsbeispiel 19 - das selbstverständlich in der Trägerform keineswegs begrenzend ist, vielmehr sind beliebige Trägerkonturen denkbar - die Träger 3 eine von einer Kreisbahn abweichende Kontur besitzen, ergeben sich zwangsläufig wiederum völlig unterschiedliche Stellmöglichkeiten, die aus der Bahngeometrie resultieren.

Die Figuren 20 und 21 zeigen ein Ausführungsbeispiel eines nicht zur Erfindung gehörenden Hexapods 1 in Form von Prinzipdarstellungen. Hier ist jeder Träger 3 als längliche Strebe ausgeführt, die jeweils um eine separate Drehachse 30 drehbar ist. Im gezeigten Beispiel sind die Drehachsen 30 versetzt zueinander angeordnet, sie liegen beispielsweise alle auf dem gleichen Radius und sind äquidistant um 60° voneinander beabstandet. Zu jedem Träger 3 ist seine Bewegungsbahn 31, also eine Kreisbahn, dargestellt. Am jeweiligen Ende eines Trägers 3 befindet sich die jeweilige Halterung 8, an der die jeweilige Strebe 13, die zur Aufnahme 15 führt, befestigt ist. Zum Verstellen der Aufnahme 15 werden nun über nicht näher gezeigte Antriebsmittel, hier wiederum Stellmotoren, die einzelnen Träger 3 um ihre jeweilige Drehachse 30 in eine beliebige Position verschwenkt, woraus resultiert, dass zwangsläufig auch die entsprechende Halterung 8 und hierüber die Strebe 13 bewegt wird.

Wenngleich die Möglichkeit besteht, die strebenförmigen Träger 3 jeweils in einer Horizontalebene zu bewegen, wobei bevorzugt die einzelnen Horizontalebenen vertikal versetzt zueinander sind, damit die Träger 3 nicht gegeneinander laufen, ist es beim Ausführungsbeispiel, wie in Fig. 21 gezeigt, vorgesehen, dass die Träger 3 im Raum verkippt angeordnet sind, so dass sich ebenfalls im Raum verkippte Bahnen respektive Bewegungsebenen ergeben. Das heißt, dass es zu einer Hebe- und Senkbewegung im Falle einer 360°-Rotation eines Trägers 3 kommt.

Wenngleich die Figuren 20 und 21 eine äquidistante, symmetrische Anordnung der Drehachsen 30 beschreibt, ist es selbstverständlich denkbar, diese auch anderweitig im Raum zu verteilen. Auch ist es denkbar, zur weiteren Erhöhung der Verstellflexibilität zusätzlich die Halterungen 8 längs der Träger 3 bewegen zu können.

Schließlich ist noch festzuhalten, dass anstelle von Ringen die Träger auch als Ringabschnitte bzw. Ringsegmente ausgeführt sein können. Beispielsweise kann ein Ringsegment 120° oder 180° beschreiben. Solche Ringsegmente können wie beispielsweise bei Ausführung gemäß Fig. 1 ff. vertikal übereinander angeordnet sein, jedoch um die zentrale Drehachse versetzt zueinander positioniert sein. Entsprechend sind auch die einzelnen Stellmotoren 17 versetzt angeordnet. Diese Ausgestaltung lässt gleichermaßen eine Aufnahmenverstellung zu, jedoch sind dann natürlich keine 360°-Drehungen möglich.

Der erfindungsgemäße Hexapod in seinen unterschiedlichen Ausführungsformen (selbstverständlich sind die gezeigten Ausführungsbeispiele keinesfalls beschränkend) lässt eine hochgenaue und hochflexible Positionierung der Aufnahme 15 zu. An der Aufnahme 15 können beliebige Gerätschaften angeordnet sein. Dies können kleine und kleinste Gerätschaften sein, beispielsweise in der Medizintechnik zu verwendende Operations- oder Arbeitsmittel, oder in der Bearbeitungstechnik zu verwendende Werkzeuge oder Werkstückhalter, bis hin zu großen Strukturen wie Teleskope oder Satellitenschüssel oder Simulatoren wie Flugsimulatoren, Hubschraubersimulatoren oder Kraftfahrzeugsimulatoren. Sein Einsatz ist folglich überall dort möglich, wo eine Bewegung um sechs - mit dem erfindungsgemäßen Hexapod sogar um sieben - Freiheitsgrade erforderlich ist und insbesondere 360°-Drehungen in beliebiger Anzahl erforderlich sind.

## Patentansprüche

1. Hexapod, umfassend eine vorzugsweise plattenförmige Aufnahme, an der wenigstens fünf, vorzugsweise sechs in separaten Gelenken gelagerte Stäbe angeordnet sind, wobei jeder Stab mit seinem anderen Ende gelenkig an einer Halterung angeordnet ist, wobei alle Halterungen längs einer Bewegungsbahn bewegbar sind, wobei an jeder Halterung (8) nur ein Stab (13) gelenkig angeordnet ist, wobei jede Halterung (8) an einem separaten Träger (3) angeordnet ist, wobei ein Träger (3) ein Ring oder ein Ringabschnitt ist oder, eine geschlossene oder offene Bewegungsbahn definierend, eine zwei- oder dreidimensional gewundene Raumform besitzt, und wobei entweder die jeweilige Halterung (8) entlang des jeweiligen Trägers (3) bewegbar ist, oder der jeweilige Träger (3) samt der an ihm angeordneten Halterung (8) bewegbar ist.

2. Hexapod nach Anspruch 1, **dadurch gekennzeichnet, dass** die Träger (3) in der gleichen Horizontalebene, in parallelen Horizontalebenen oder verkippt zueinander angeordnet sind.

3. Hexapod nach Anspruch 1 oder 2, **dadurch gekennzeichnet, dass** die Ringe oder Ringabschnitte konzentrisch übereinander angeordnet oder konzentrisch ineinanderliegend angeordnet sind, oder dass die Ringe oder Ringabschnitte vertikal und radial versetzt zueinander angeordnet sind.

4. Hexapod nach einem der vorangehenden Ansprüche, **dadurch gekennzeichnet, dass** jeder bewegbare Träger (3) oder jede bewegbare Halterung (8) separat über ein eigenes lagefestes Antriebsmittel (16) bewegbar ist, oder dass zwei Träger (3) oder Halterungen (8) miteinander derart bewegungsgekoppelt sind, insbesondere über ein vorzugsweise schaltbares Getriebe, dass sie über ein gemeinsames lagefestes Antriebsmittel (16) bewegbar sind.

5. Hexapod nach Anspruch 4, **dadurch gekennzeichnet, dass** jeder bewegbare Träger (3) eine Verzahnung (20) aufweist, mit der ein über einen lagefesten Motor (17) angetriebenes Abtriebselement (18, 19, 22) kämmt.

6. Hexapod nach Anspruch 5, **dadurch gekennzeichnet, dass** bei konzentrisch übereinander liegenden Ringen oder Ringabschnitten die Verzahnungen (20) an der Außen- oder Innenseite und bei in einer oder mehreren verschiedenen, gegebenenfalls verkippten Horizontalebene liegenden Ringen oder Ringabschnitte die Verzahnung (20) an der Unterseite vorgesehen ist.

7. Hexapod nach Anspruch 6, **dadurch gekennzeichnet, dass** eine bewegbare Halterung (8) über ein längs des Trägers (3) geführtes Zugmittel (28), das mit einem Motor gekoppelt ist, bewegbar ist.

8. Hexapod nach Anspruch 7, **dadurch gekennzeichnet, dass** eine bewegbare Halterung (8) als Schlitten ausgeführt ist.

9. Hexapod nach einem der Ansprüche 1 bis 6, **dadurch gekennzeichnet, dass** die bewegbaren Träger (3), insbesondere die Ringe oder Ringabschnitte, über Lagermittel (6) an einem oder mehreren feststehenden Bauteilen gelagert sind, oder dass sie über zwischen ihnen angeordnete Lagermittel (6) gelagert sind.

10. Hexapod nach Anspruch 9, **dadurch gekennzeichnet, dass** die bewegbaren Träger (3), insbesondere die Ringe oder Ringabschnitte jeweils einen Lagerarm (23) aufweisen, wobei alle Lagerarme (23) über Lagermittel an einer gemeinsamen zentralen Lagerstütze (24) gelagert sind.

11. Hexapod nach Anspruch 9, **dadurch gekennzeichnet, dass** die konzentrischen und im Durchmesser gleichen Ringe mit ihren Außenseiten an wenigstens drei Lagerstützen (24) über jeweilige stützenseitige Lagermittel gelagert sind.

12. Hexapod nach einem der vorangehenden Ansprüche, **dadurch gekennzeichnet, dass** eine gemeinsame, alle Antriebsmittel (16) steuernde Steuerungseinrichtung (19) vorgesehen ist.

## Claims

1. Hexapod, comprising a preferably plate-shaped receptacle, on which at least five, preferably six rods mounted in separate joints are arranged, wherein the other end of each rod is articulated on a mounting, wherein all the mountings can be moved along a path of movement, wherein only one rod (13) is articulated on each mounting (8), wherein each mounting (8) is arranged on a separate support (3), wherein a support (3) is a ring or a ring section or has a two-dimensionally or three-dimensionally convoluted spatial form, defining a closed or open path of movement, and wherein either the respective mounting (8) is movable along the respective support (3) or the respective support (3) is movable together with the associated mounting (8).

2. Hexapod according to Claim 1, **characterized in that** the supports (3) are arranged in the same horizontal plane, in parallel horizontal planes, or tilted relative to each other.

3. Hexapod according to Claim 1 or 2, **characterized in that** the rings or ring sections are arranged concentrically one above the other or concentrically within each other, or **in that** the rings or ring sections are arranged vertically and radially staggered from each other.

4. Hexapod according to one of the preceding claims, **characterized in that** each movable support (3) or each movable mounting (8) is separately movable by its own stationary driving means (16), or **in that** two supports (3) or mountings (8) are coupled together in movement, especially by a preferably shiftable transmission, so that they can be moved via a shared stationary driving means (16).

5. Hexapod according to Claim 4, **characterized in that** each movable support (3) has a toothing (20), which meshes with a takeoff element (18, 19, 22) driven by a stationary motor (17).

6. Hexapod according to Claim 5, **characterized in that**, in the case of rings or ring sections lying concentrically one above another, the toothings (20) are provided on the outside or inside, and for rings or ring sections lying in one or more different, possibly tilted, horizontal planes, the toothing (20) is provided on the underside.

7. Hexapod according to Claim 6, **characterized in that** a movable mounting (8) can be moved with a traction means (28) led along the support (3) and coupled to a motor.

8. Hexapod according to Claim 7, **characterized in that** a movable mounting (8) is configured as a carriage.

9. Hexapod according to one of Claims 1 to 6, **characterized in that** the movable supports (3), especially the rings or ring sections, are mounted via bearing means (6) on one or more stationary structural parts, or **in that** they are mounted by bearing means (6) arranged between them.

10. Hexapod according to Claim 9, **characterized in that** the movable supports (3), especially the rings or ring sections, each have a bearing arm (23), and all bearing arms (23) are mounted via bearing means on a common central pillow block (24) .

11. Hexapod according to Claim 9, **characterized in that** the concentric rings of the same diameter are mounted with their outsides on at least three pillow blocks (24) by respective bearing means at the block side.

12. Hexapod according to one of the preceding claims, **characterized in that** a common control mechanism (19) that controls all driving means (16) is provided.

## Revendications

1. Hexapode, comprenant un logement de préférence en forme de plaque, sur lequel sont disposées au moins cinq, de préférence six, barres supportées dans des articulations séparées, chaque barre étant disposée de manière articulée par son autre extrémité sur une fixation, toutes les fixations pouvant être déplacées le long d'une trajectoire de déplacement, une seule barre (13) étant disposée de manière articulée sur chaque fixation (8), chaque fixation (8) étant disposée sur un support séparé (3), un support (3) étant une bague ou une section de bague ou possédant une forme spatiale enroulée bidimensionnelle ou tridimensionnelle définissant une trajectoire de déplacement fermée ou ouverte et soit la fixation respective (8) pouvant être déplacée le long du support respectif (3), soit le support respectif (3) pouvant être déplacé conjointement avec la fixation (8) disposée sur lui.

2. Hexapode selon la revendication 1, **caractérisé en ce que** les supports (3) sont disposés dans le même plan horizontal, dans des plans horizontaux parallèles ou de manière basculée les uns par rapport aux autres.

3. Hexapode selon la revendication 1 ou 2, **caractérisé en ce que** les bagues ou les sections de bague sont disposées concentriquement les unes au-dessus des autres ou concentriquement les unes dans les autres ou **en ce que** les bagues ou les sections de bague sont disposées de manière décalée verticalement et radialement les unes par rapport aux autres.

4. Hexapode selon l'une quelconque des revendications précédentes, **caractérisé en ce que** chaque support déplaçable (3) ou chaque fixation déplaçable (8) peut être déplacé(e) séparément par le biais d'un moyen d'entraînement propre fixé en position (16) ou **en ce que** deux supports (3) ou fixations (8) sont accouplé(e)s mutuellement de manière déplaçable de telle sorte qu'ils ou elles puissent être déplacé(e)s par le biais d'un moyen d'entraînement commun fixé en position (16), notamment par le biais d'une transmission de préférence à changement de rapport.

5. Hexapode selon la revendication 4, **caractérisé en ce que** chaque support déplaçable (3) présente une denture (20) avec laquelle s'engrène un élément de prise de force (18, 19, 22) entraîné par le biais d'un moteur fixé en position (17).

6. Hexapode selon la revendication 5, **caractérisé en ce que** dans le cas de bagues ou de sections de bague disposées concentriquement les unes au-dessus des autres, les dentures (20) sont prévues au niveau du côté extérieur ou intérieur et dans le cas de bagues ou sections de bague situées dans un ou plusieurs plans horizontaux différents, éventuellement basculés, la denture (20) est prévue au niveau du côté inférieur.

7. Hexapode selon la revendication 6, **caractérisé en ce qu'**une fixation déplaçable (8) peut être déplacée par le biais d'un moyen de traction (28) guidé le long du support (3), qui est accouplé à un moteur.

8. Hexapode selon la revendication 7, **caractérisé en ce qu'**une fixation déplaçable (8) est réalisée sous forme de chariot.

9. Hexapode selon l'une quelconque des revendications 1 à 6, **caractérisé en ce que** les supports déplaçables (3), en particulier les bagues ou les sections de bague, sont supportés par le biais de moyens de palier (6) sur un ou plusieurs composants fixes, ou **en ce qu'**ils sont supportés par le biais de moyens de palier (6) disposés entre eux.

10. Hexapode selon la revendication 9, **caractérisé en ce que** les supports déplaçables (3), en particulier les bagues ou les sections de bague présentent à chaque fois un bras de palier (23), tous les bras de palier (23) étant supportés par le biais de moyens de palier sur un appui de palier central commun (24).

11. Hexapode selon la revendication 9, **caractérisé en ce que** les bagues concentriques et de mêmes diamètres sont supportées avec leurs côtés extérieurs sur au moins trois appuis de palier (24) par le biais de moyens de palier respectifs du côté des appuis.

12. Hexapode selon l'une quelconque des revendications précédentes, **caractérisé en ce qu'**un dispositif de commande commun (19) commandant tous les moyens d'entraînement (16) est prévu.
